# EUROPEAN PATENT APPLICATION

(11) **EP 4 765 326 A1**
(43) Date of publication of application: **24.06.2026**
(21) Application number: 24220732.2
(22) Date of filing: 17.12.2024
(51) Int. Cl.: H01M 10/613, H01M 10/625, H01M 10/647, H01M 10/6557, H01M 50/209, H01M 50/262, H01M 10/6568

(54) **A BATTERY MODULE AND AN ELECTRIC VEHICLE INCLUDING THE BATTERY MODULE**

(71) Applicant: SAMSUNG SDI CO., LTD., Yongin-si, Gyeonggi-do 17084 (KR)
(72) Inventor: Rabanser, Mike, 8010 Graz (AT)
(74) Representative: Gulde & Partner

(57) **Abstract**

The present disclosure refers to a battery module (1). The battery module (1) includes a module base plate (12) and battery cells (11) stacked in a stacking direction (D) on the module base plate (12). Further, the battery module (1) includes at least one cooling element (13) with a connector (14), wherein the cooling element (13) is disposed on the module base plate (12), and at least one module cooling element connector (15) which extends along at least a part of the stacking direction (D) on a side of the module base plate (12) opposite to the cooling element (13). The module cooling element connector (15) includes a cooling element portion (151) which is connected to the connector (14) of the cooling element (13) via a fluid connecting element (121) of the module base plate (12) and via sealings (17) between the cooling element portion (151), the module base plate (12) and the connector (14) of the cooling element (13), wherein a flow path (16) is formed between the cooling element portion (151), the module base plate (12) and the connector (14) of the cooling element (13). The module cooling element connector (15) further includes a clamping clip portion (152) configured to engage with the connector (14) of the cooling element (13) for pulling the cooling element portion (151) and the connector (14) towards the module base plate (12) such that a sealing force is provided onto the sealings (17) by the clamping clip portion (152).

## Description

### Field of the Disclosure

Embodiments of the present disclosure relates to a battery module. The present disclosure also relates to an electric vehicle including the battery module.

### Technological Background

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel, or a mixture of series and parallel connections to provide the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell(s), battery module(s), and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules and/or voltages of individual battery cells), temperature (e.g., an average temperature of the battery pack or battery modules, coolant intake temperature, coolant output temperature, or temperatures of individual battery cells), coolant flow (e.g., flow rate and/or cooling fluid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

The mechanical integration of a battery pack requires appropriate mechanical connections between the individual components, e.g. of battery modules, and between them and a supporting structure of a vehicle. These connections must remain functional and save during the average service life of the battery system. Further, installation space and interchangeability requirements must be met, especially in mobile applications.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

The batteries must be operated in a "comfortable temperature range". If the battery is not within this range, its service life will be reduced. In addition, the battery cannot provide the necessary power if the temperature is too low or too high. If the temperature is too high, it can even become dangerous. It can lead to self-heating and thus to thermal runaway of the battery, in the worst case to the vehicle burning d own.

Lithium-ion batteries differ in detail in their cell chemistry and therefore also in their temperature-specific properties. The comfortable temperature range is usually between 20 and 40 °C. Nickel-manganese-cobalt (NMC) and nickel-cobalt-aluminum (NCA) cells achieve an acceptable level of efficiency even at 0 °C, meaning that the energy that cannot be extracted from the battery is at an acceptable level. Cheaper lithium iron phosphate (LFP) cells are less efficient at such low temperatures. Solid-state batteries promise a significantly larger feel-good range, but are still at the research stage. The ranges should not be regarded as rigid. The efficiency of a cell can increase further at temperatures above 40 °C, while ageing effects increase.

Cooling concepts can be differentiated according to the cooling fluid used and the design of the battery module.

The largest market share is currently held by cooling systems with water-glycol mixtures as the coolant. The battery is cooled via one or more cooling plates through which the coolant flows. The coolant heats up and transfers the heat to another fluid in a heat exchanger. At low ambient temperatures and low cooling capacity, the heat can be transferred to the ambient air via an ambient heat exchanger in the front end of the vehicle. At high ambient temperatures, the heat can no longer be transferred to the air, but must be transferred to a refrigerant circuit. This typically takes place in a plate heat exchanger, which is usually referred to as a chiller (cooler). Refrigerant evaporates in the chiller and absorbs the heat from the coolant. The refrigerant is then compressed to a higher pressure and temperature level. From this level, the heat can in turn be transferred to the ambient air. As the heat is first transferred to a coolant and then to a refrigerant, this is referred to as an indirect cooling system.

In contrast to this are direct cooling systems, in which evaporating refrigerant flows through the cooling plate(s). Direct cooling systems have the great advantage that the temperature of the refrigerant does not change during evaporation. The battery is thus cooled homogeneously. Another advantage is that no chiller is required. However, the piping in the vehicle for the volatile refrigerant is more complex than piping for the coolant and the amount of refrigerant required is higher compared to indirect cooling systems.

In addition to the choice of the cooling fluid, the aforementioned concepts also differ in the connection of the cooling plates. This proves to be challenging due to tolerances. In addition, the connection involves a great deal of assembly work.

### Summary of Invention

The invention is defined by the appended claims. The description that follows is subjected to this limitation. Any disclosure lying outside the scope of the claims is only intended for illustrative as well as comparative purposes.

According to an embodiment, a battery module is provided including: a module base plate; battery cells stacked in a stacking direction on the module base plate; at least one cooling element with a connector, wherein the cooling element is disposed on the module base plate; and at least one module cooling element connector extending along at least a part of the stacking direction on a side of the module base plate opposite to the cooling element, wherein the module cooling element connector includes: a cooling element portion which is connected to the connector of the cooling element via a fluid connecting element of the module base plate and via sealings between the cooling element portion, the module base plate and the connector of the cooling element, wherein a flow path is formed between the cooling element portion, the module base plate and the connector of the cooling element; and a clamping clip portion configured to engage with the connector of the cooling element for pulling the cooling element portion and the connector towards the module base plate such that a sealing force is provided onto the sealings by the clamping clip portion.

According to another embodiment, an electric vehicle is provided including the battery module according to an embodiment.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1A illustrates a schematic structure of a battery module in side view according to one embodiment.
FIG. 1B illustrates a schematic structure of a battery module in top view according to one embodiment.
FIG. 1C illustrates a schematic structure of a battery module in top view according to another embodiment.
FIG. 2 illustrates a schematic structure of a part of a battery module in side view according to one embodiment.
FIG. 3 illustrates a schematic structure of a part of a battery module in side view according to another embodiment.
FIG. 4 illustrates a cross-sectional view of a part of battery module in cross-sectional view according to one embodiment.
FIG. 5A illustrates a schematic structure of a snap hook connection between a connector and a clamping clip portion in side view according to one embodiment.
FIG. 5B illustrates a schematic structure of a snap hook connection between a connector and a clamping clip portion in side view according to another embodiment.
FIG. 6 illustrates a cross-sectional view of a part of a battery module in cross-sectional view according to another embodiment.
FIGS. 7A and 7B illustrate respectively a top view of different configurations of a module base plate according to some embodiments.
FIGS. 8A and 8B illustrate respectively a top view of different configurations of a connector according to some embodiments.
FIGS. 9A and 9B illustrate respectively a top view of different configurations of a cooling element portion according to some embodiments.

### Detailed Description of the Invention

Reference will now be made in detail to embodiments, examples of which are illustrated in the accompanying drawings. Effects and features of the exemplary embodiments, and implementation methods thereof, will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one embodiment of the present disclosure, a battery module is provided. The battery module includes a module base plate and battery cells stacked in a stacking direction on the module base plate. Further, the battery module includes at least one cooling element with a connector, wherein the cooling element is disposed on the module base plate, and at least one module cooling element connector which extends along at least a part of the stacking direction on a side of the module base plate opposite to the cooling element. The module cooling element connector includes a cooling element portion which is connected to the connector of the cooling element via a fluid connecting element of the module base plate and via sealings between the cooling element portion, the module base plate, and the connector of the cooling element, wherein a flow path is formed between the cooling element portion, the module base plate, and the connector of the cooling element. The module cooling element connector further includes a clamping clip portion configured to engage with the connector of the cooling element for pulling the cooling element portion and the connector towards the module base plate such that a sealing force is provided onto the sealings by the clamping clip portion.

In other words, the battery module includes a module base plate, on which the battery cells are disposed. The relative arrangement may refer to an arrangement of the battery module in a vehicle that is used as intended, i.e. is in an operational position. Accordingly, "above" and "below" may refer to a positive z-direction that runs upwards in a vertical direction. In other words, the module base plate is arranged below the battery cells.

In other words, the module base plate may have two opposing sides, with the battery cells arranged on one of the two sides and the module cooling element connector extending on the other side. Furthermore, the cooling element portion is fluidly connected to the connector via the fluid connecting element of the module base plate. In other words, the cooling element portion, the module base plate and the cooling element are fluidly connected. In other words, the aforementioned elements are configured to conduct coolant or refrigerant from a cooling circuit so that a connection between the cooling circuit and the cooling element is established via the flow path.

According to one embodiment, the stacking direction may run along a long side or a short side of the battery module.

According to another embodiment, the module cooling element connector may extend on a side of the module base plate opposite to the cooling element, which in the context of the present disclosure means that at least a part of the module cooling element connector extends on the side of the module base plate opposite to the cooling element, wherein another part or a portion of the module cooling element connector may also extend on other areas and sides of the module base plate. The cooling element portion may extend on the side of the module base plate opposite to the cooling element and the clamping clip portion may extend on the side of the module base plate on which the cooling element is disposed.

In the present disclosure, the term "heat transfer medium" is used as a generic term for refrigerant and coolant, irrespective of the present cooling concept.

According to another embodiment, the cooling element may be configured to receive heat from the battery cells to cool them by using a heat transfer medium accommodated in and flowing through the cooling element. In other words, the cooling element may include a heat transfer medium flow channel or a heat transfer medium flow path.

According to another embodiment, the connector may also include a heat transfer medium flow channel or a heat transfer medium flow path for the heat transfer medium.

According to another embodiment, the connector and the cooling element are connected to each other so that they form a flow path for a heat transfer medium.

According to another embodiment, the battery module may include a first and a second end plates, wherein the module base plate may extend in the stacking direction between the end plates. The battery cells may be stacked between the first and second end plates.

According to another embodiment, the battery module may include two side plates, wherein a first end of each of the side plates is connected to the first end plate and a second end of each of the side plates is connected to the second end plate.

According to another embodiment, the connector may have an inlet and an outlet, one of the two being connected to the cooling element and the other of the two being connected to the module cooling element connector by means of the fluid connecting element of the module base plate.

In other words, a battery module including a module base plate, a liquid cooling element with a connector, and a plurality of battery cells is provided. The battery cells are stacked on the module base plate with a thermally conductive connection to the cooling element. The battery module includes at least one module cooling element connector, which extends along at least a part of the stacking direction on a side of the module base plate opposite to the cooling element. The module cooling element connector includes a cooling element portion, which is connected to the connector of the cooling element via the fluid connecting element of the module base plate and via sealings between the cooling element portion, the module base plate and the connector of the cooling element. The module cooling element connector includes a clamping clip portion to engage with the connector of the cooling element for pulling the cooling element portion and the connector towards the module base plate, such that a sealing force is provided onto the sealings by the clamping clip portion.

The gist of the disclosure is a module cooling element connector with a cooling element portion and a clamping clip portion for establishing a sealing force to seal the cooling element portion and connector of cooling plates to a module base plate.

In other words, a connector is applied to the cooling element that runs along at least a part of the cell stack, through which a heat transfer medium flows. The cooling element is connected to a cooling circuit of the battery module via a surface seal and a clamp connection.

The advantages of this disclosure are the increase in energy density and cost savings in the overall concept of the battery pack.

This disclosure includes a solution to connect a cooling element, that is used as flow-through cooler in a battery module, to a coolant distributor of the battery module and thus enables a cooling variant that has a very efficient effect on battery lifetime performance and increased safety in the event of a thermal runaway when using prismatic, pouch, or cylindrical cells with NMC/NCA cell chemistry.

The disclosure described includes a quick connection technology of the battery modules cooling technology, in which a cooling element for prismatic, pouch or cylindrical cells are used as flow-through cooling profiles.

Another advantage of this cooler connection technology is that the cell stack can be disassembled and therefore replaced or recycled in an efficient way at the end of its life.

According to another embodiment, the cooling element may be attached to the battery cells from above or below in a horizontal position. If a high cooling capacity is required, two cooling elements may also be used as a sandwich. It is also possible to place a plurality of cooling elements vertically between the individual battery cells. The larger and better distributed the cooling surfaces are, the more potent and homogeneous the cooling is. The required installation space and weight are an obstacle to this. The design of the battery cells, the electrical contact and the crash behavior must also be considered when selecting the cooling surfaces.

According to another embodiment, the connector may include a plurality of connectors and/or the cooling element may include a plurality of cooling elements.

In the case of a plurality of cooling elements, the cooling elements may be stacked in the stacking direction on the module base plate, the battery cells being stacked alternately with the cooling elements. In other words, the battery cells may be alternatingly stacked with the cooling elements along a stacking direction on the module base plate.

According to another embodiment, the connector may be only one connector extending along the stacking direction, extending over or overlapping one or more cooling elements and fluidly connected thereto, or may include a plurality of individual connectors, each fluidly connected to one or more cooling elements and arranged along the stacking direction.

According to another embodiment, the cooling element may extend over the entire battery cell height and/or battery cell width, i.e., in other words, essentially correspond to a surface of a battery cell and being parallel to one or more battery cells. The connector may have an extension along the cell height direction that is greater than the height of the cooling element connected to it. In this case, the fluidic connection is made over the entire height of the cooling element, but may also only be made over a section of the height of the cooling element, so that it is then closed in the remaining area. In the latter case, the connector may only extend over part of the height of the cooling element connected to it.

According to another embodiment, the cooling element may be a cooling plate that is arranged parallel to the module base plate, i.e., below or above the battery cell stack.

According to another embodiment, the cooling element may be plate-shaped, rib-shaped and/or tubular.

According to another embodiment, the cooling element may have a cooling medium inlet on one side and a cooling medium outlet on one side. The sides may be arranged on the same side of the cooling element or on opposite sides. A flow path of the heat transfer medium may initially run vertically in supply and discharge areas of the cooling element and/or the connector and horizontally between the areas. A flow direction within the cooling element portion may be horizontal, with a deflection in the vertical direction to enable distribution to the connector and the cooling element.

According to another embodiment, the fluid connecting element of the module base plate is a connecting means that ensures a fluidic connection between the cooling element portion and the connector. In other words, it forms part of the flow path. The seals prevent or reduce the heat transfer medium from leaking at the connection point between the cooling element portion and the module base plate and between the module base plate and the connector. In other words, the cooling element portion, the module base plate, or a part thereof including the fluid connecting element, and the connector are arranged in this order relative to each other.

According to one embodiment, the clamping clip portion is configured to form a form-fit connection with the connector and/or the cooling element portion is configured to form a form-fit connection with the module base plate. This provides a detachable connection that simplifies assembly and disassembly.

According to another embodiment, the module cooling element connector is configured to form a form-fit connection between the clamping clip portion and the cooling element portion via a screw connection between the cooling element portion and the clamping clip portion. Accordingly, the clamping clip portion and the cooling element portion each have a bore, at least one of which has a thread. By using a screw corresponding to the thread with a screw head whose diameter is larger than both bores or at least than the bore not having a thread, the clamping clip portion and the cooling element portion can be connected to each other. In other words, the module cooling element connector can have two separate elements, the clamping clip portion and the cooling element portion, both having a bore, at least one of which has a thread, which can then be form- and force-locked together by means of a corresponding screw element. The fluid connecting element arranged between the clamping clip portion and the cooling element portion is thereby fixed by the engaging clamping clip portion in conjunction with the screw connection.

According to another embodiment, the form-fit connection is a snap fit connection. In other words, the clamping clip portion and the connector of the cooling element are adapted to provide a snap fit connection with each other and/or the cooling element portion and the module base plate are adapted to provide a snap fit connection with each other. A snap-fit is an assembly method used to attach flexible parts, usually plastic, to form the final product by pushing the parts' interlocking components together. There are a number of variations in snap-fits, including cantilever, torsional and annular. Snap-fits, as integral attachment features, are an alternative to assembly using nails or screws, and have the advantages of speed and no loose parts.

According to another embodiment, the clamping clip portion and/or the cooling element portion include a snap hook for connecting to a corresponding snap hook of the module base plate and/or a corresponding snap hook of the connector.

According to another embodiment, the clamping clip portion and/or the cooling element portion include a plurality of snap hooks for connecting to corresponding snap hooks of the module base plate and/or corresponding snap hooks of the connector at different positions due to tolerance chain in the cell stack and/or changes in width of the cell stack.

According to another embodiment, the module cooling element connector is pivotably mounted on the module base plate and adapted to be pivoted from an opened position in which the cooling element can be positioned on the module base plate to a closed position in which the module base plate is clamped between the connector of the cooling element and the cooling element portion. In other words, the clamp connection is closed from below by a rotary movement after assembly of the module cooling element connector to the module base plate. For this purpose, a joint or bearing may be attached to the module base plate, around which the cooling element portion and clamping clip portion can be rotated or pivoted.

According to another embodiment, the cooling element may be an extrusion profile, a plate heat exchanger, and/or a tube heat exchanger. The extrusion profile may be an aluminum extrusion profile.

According to another embodiment, the cooling element may be connected to the connector via a substance-to-substance, form-fit, and/or force-fit connection. The cooling element may be connected to the connector via glue, welded joint, and/or plug connection. This may depend on the material of the connector, so the appropriate method can be used.

According to another embodiment, the connector and/or the module cooling element connector may include fiber-reinforced plastic. The connector and/or the module cooling element connector may include fiber-reinforced plastic injection molding, and/or cast material, e. g., die-cast material. In this way, an efficient connection over the service life can be achieved when using the connection according to the disclosure.

According to another embodiment, the fluid connecting element and/or the connector may include a plurality of through-holes and/or a longitudinal opening for forming a part of the flow path. The plurality of through-holes and/or the longitudinal opening are configured to ensure the fluidic connection between the respectively interconnected components and to enable the transfer and flow of the heat transfer medium from one component to the other. Furthermore, the plurality of through-holes and/or the longitudinal opening are also generally referred to as connecting means. The plurality of through-holes and/or the longitudinal opening may extend along the stacking direction. The longitudinal opening may be a slot hole or, in other words, an elongated hole. In other words, the fluid connecting element in such an embodiment provides a connecting element that ensures the fluidic connection between the fluid connecting element and cooling element portion and between the fluid connecting element and the connector resulting in a connection between the cooling element portion and the connector. If both the fluid connecting element and the connector include the plurality of through-holes and/or the longitudinal opening, these are arranged together or at least partially aligned in such a way that they form a free flow cross-section.

According to another embodiment, the cooling element portion may include a longitudinal channel for heat transfer medium of a cooling circuit and a plurality of through-holes and/or a longitudinal opening for forming a part of the flow path. The plurality of through-holes and/or the longitudinal opening are configured to ensure the fluidic connection between the respectively interconnected components and to enable the transfer and flow of the heat transfer medium from one component to the other. Furthermore, the plurality of through-holes and/or the longitudinal opening are also generally referred to as connecting means. The plurality of through-holes and/or the longitudinal opening may extend along the stacking direction. The longitudinal opening may be a slot hole. In other words, the cooling element portion in such an embodiment provides a connecting means that ensures the fluidic connection between the fluid connecting element and the cooling element portion. If the fluid connecting element includes a plurality of through-holes and/or a longitudinal opening, these are arranged together or at least partially aligned with the ones of the cooling element portion in such a way that they form a free flow cross-section.

According to another embodiment, the fluid connecting element, the plurality of through-holes and/or the longitudinal opening of the connector and/or of the cooling element portion include a pattern and/or a dimension configured to vary a mounting position of the cooling element. A diameter or radius of the fluid connecting element in the form of the through-holes and/or a width of the fluid connecting element in the form of the longitudinal opening of the module base plate may be larger than a diameter or radius of the through-holes and/or a width of the longitudinal opening of the connector and/or of the cooling element portion. A reverse design is also possible, whereby in other words a diameter or radius of the fluid connecting element in the form of the through-holes and/or a width of the fluid connecting element in the form of the longitudinal opening of the module base plate may be smaller than a diameter or radius of the through-holes and/or a width of the longitudinal opening of the connector and/or of the cooling element portion. Both variants enable tolerance compensation despite the large number of components. Each of the components can have its own tolerances and inaccuracies during production. These can therefore also add up with a large number of components. This can result in tolerances of up to ± 2 mm. As a result, the position of the cooling element varies and must be compensated for. Due to the unequal dimensions, the corresponding connecting means of the fluid connecting element of the module base plate and the corresponding connecting means of the connector are nevertheless aligned in such a way that a flow cross-section always remains free so that there is a continuous fluidic connection between the components. In other words, the respective connecting means overlap each other. The above also applies to a relationship between the corresponding connecting means of the cooling element portion and the connecting means of the fluid connecting element of the module base plate.

According to another embodiment, the sealings include a paper gasket, vulcanized elastomer, loose elastomer and/or a metal gasket.

According to another embodiment, the module cooling element connector includes an elasticity such that the module cooling element connector is elastically deformable and such that the cooling element portion and/or the clamping clip portion interlocks detachably and/or non-detachably with the module base plate and/or the connector. This makes assembly particularly easy. By manually spreading the cooling element portion and clamping clip portion, their distance from each other increases reversibly and assembly can be carried out in the meantime by connecting the aforementioned elements to the module base plate and the connector, with the cooling element portion and clamping clip portion engaging around the module base plate and connector. The expansion can then be removed so that the clamping clip portion engages with the connector. The module cooling element connector can also be slid onto a connection between the module base plate and the connector, causing it to spread automatically.

Yet another embodiment of the present disclosure refers to an electric vehicle. The electric vehicle includes the battery module according to the disclosure.

### Specific Embodiments

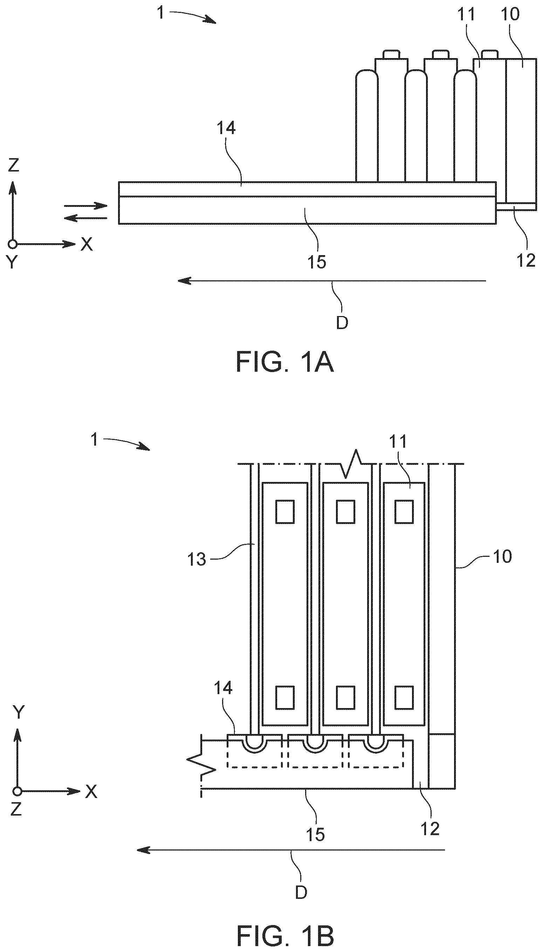

FIG. 1A is a side view illustrating a schematic structure of a battery module 1 according to one embodiment. The battery module 1 includes an end plate 10 and a module base plate 12. The battery module 1 includes a housing (not shown) and a plurality of battery cells 11 accommodated within the housing as a battery cell stack along a stacking direction D. The battery cells 11 are disposed on the module base plate 12. The relative arrangements are illustrated by the x-, y- and z-axes. Here, "on", "below", "underneath", "above" and "over" refer to the z-axis, with meanings such as "below" referring to a negative z-direction and "above" to a positive z-direction.

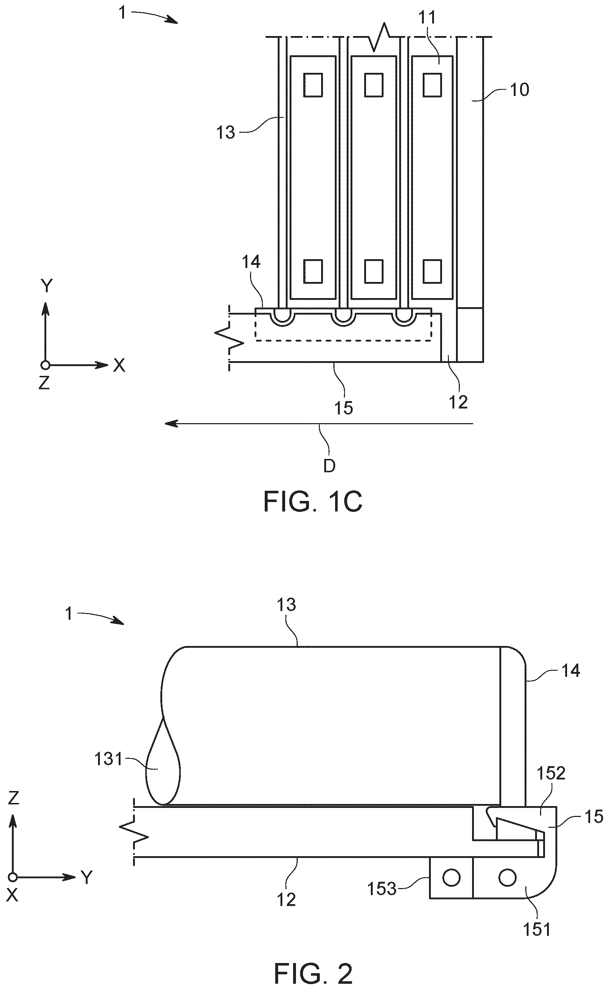

Further, the battery module 1 includes a plurality of cooling elements 13 with a connector 14, wherein the cooling elements 13 are disposed on the module base plate 12. The battery cells 11 are alternatingly stacked with the cooling elements 13 along the stacking direction D on the module base plate 12, wherein the cooling elements 13 are cooling plates. The battery module 1 includes a module cooling element connector 15 which extends along the stacking direction D on a side of the module base plate 12 opposite to the cooling elements 13. The module cooling element connector 15 includes a cooling element portion 151 (see FIGS. 2, 3, 4 and 6) which is connected to the connector 14 of the cooling elements 13 via a fluid connecting element 121 (see Figs. 2, 3, 4 and 6) of the module base plate 12 and via sealings 17 (see FIGS. 2, 3, 4 and 6) between the cooling element portion 151, the module base plate 12 and the connector 14 of the cooling elements 13. A flow path 16 (see FIGS. 2, 3, 4 and 6) is formed between the cooling element portion 151, the module base plate 12 and the connector 14 of the cooling elements 13. The module cooling element connector 15 further includes a clamping clip portion 152 (see FIGS. 2, 3, 4 and 6) configured to engage with the connector 14 of the cooling elements 13 for pulling the cooling element portion 151 and the connector 14 towards the module base plate 12 such that a sealing force is provided onto the sealings 17 by the clamping clip portion 152. Heat transfer medium may flow in the directions shown with arrows through the module cooling element connector 15 and is distributed by the connector 14 to the cooling elements 13.

Only a part of the battery module 1 is shown here, which shows the essential components. The battery module 1 may also contain other components not shown, such as other end plates, side plates, spacers and others. The battery module 1 only shows three battery cells 11 and three cooling elements 13 for reasons of simplicity. This is only a schematic overview, so that the battery module 1 may have more or fewer battery cells 11 and cooling elements 13, as well as a second end plate.

FIG. 1B is a top view illustrating a schematic structure of a battery module 1 according to one embodiment. Elements already described in FIG. 1A that also appear in FIG. 1B and are similar to those in FIG. 1A are not described repeatedly. Instead, the above also applies to these components. The dashed lines indicate non-visible contours to describe their course and relative arrangement. Accordingly, it can be seen here that the connector 14 includes a plurality of connectors 14. In this case, each connector 14 is assigned to one cooling element 13. The plurality of connectors 14 is connected to a single module cooling element connector 15, although it is also possible that several module cooling element connectors 15 are provided, which in turn are each connected to one or more connectors 14.

FIG. 1C is a top view illustrating a schematic structure of a battery module 1 according to another embodiment. Elements already described in FIG. 1A that also appear in FIG. 1C and are similar to those in FIG. 1A are not described repeatedly. Instead, the above also applies to these components. The dashed lines indicate non-visible contours to describe their course and relative arrangement. Accordingly, it can be seen here that the connector 14 includes one single connector 14. In this case, the connector 14 is assigned to all shown cooling elements 13 with separate connecting means. The connector 14 is connected to a single module cooling element connector 15, although it is also possible that several module cooling element connectors 15 are provided, which in turn are each connected to the connector 14.

FIG. 2 is a side view illustrating a schematic structure of a part of a battery module according to one embodiment. Elements already described in FIG. 1A that also appear in FIG. 2 and are similarto those in FIG. 1A are not described repeatedly. Instead, the above also applies to these components. The module cooling element connector 15 is pivotably mounted on the module base plate 12 and adapted to be pivoted from an opened position in which the cooling elements 13 can be positioned on the module base plate 12 to a closed position in which the module base plate 12 is clamped between the connector 14 of the cooling elements 13 and the cooling element portion 151. In other words, the clamp connection is closed from below by a rotary movement in the rotary direction R (see FIG: 4) after assembly of the module cooling element connector 15 to the module base plate 12. For this purpose, a pivotable joint or pivotable bearing 153 is attached to the module base plate 12, around which the cooling element portion 151 and clamping clip portion 152 can be rotated or pivoted such that the clamping clip portion 152 engages with the connector 14.

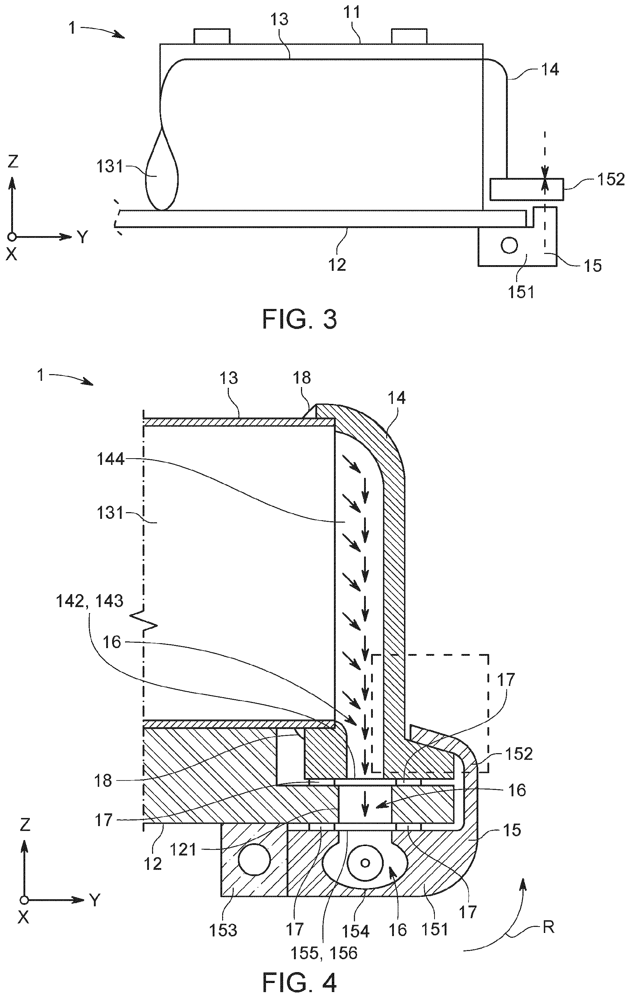

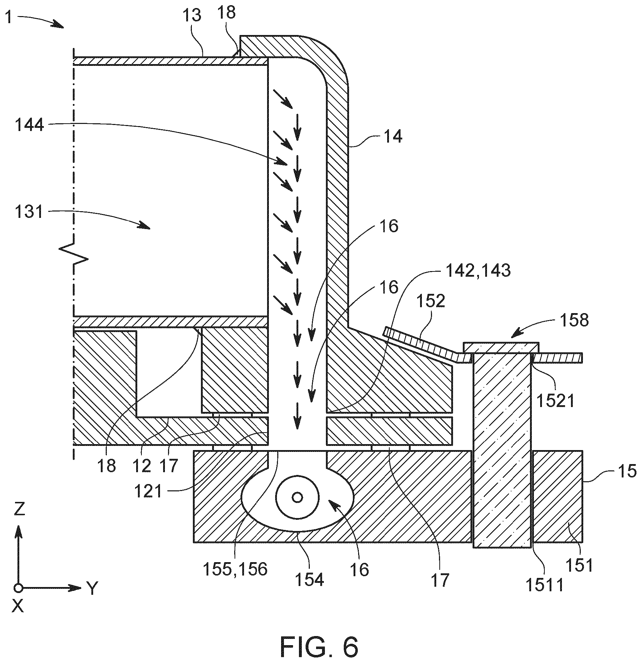

FIG. 3 is a side view illustrating a schematic structure of a part of a battery module according to another embodiment. Elements already described in FIG. 1A that also appear in FIG. 3 and are similar to those in FIG. 1A are not described repeatedly. Instead, the above also applies to these components. In FIG. 3, the module cooling element connector 15 differs in that it is configured to form a form-fit connection between the clamping clip portion 152 and the cooling element portion 151 via a screw connection between the cooling element portion 151 and the clamping clip portion 152. The form-fit connection includes a screw and a corresponding bore extending through the clamping clip portion 152 and at least partially through the cooling element portion 151. This is indicated by the arrows pointing towards each other. The configuration of this connection is explained in more detail with reference to FIG. 6. Accordingly, the clamping clip portion 152 and the cooling element portion 151 each have a bore 1511 and 1521, at least one of which has a thread (not shown). By using a screw 158 corresponding to the thread with a screw head whose diameter is larger than the bore not having a thread, the clamping clip portion 152 and the cooling element portion 151 can be connected to each other. In other words, the module cooling element connector 15 has two separate elements, the clamping clip portion 152 and the cooling element portion 151, both having a bore 1511 and 1521, at least one of which has a thread, which can then be form- and force-locked together by means of a corresponding screw 158. The fluid connecting element 121 arranged between the clamping clip portion 152 and the cooling element portion 151 is thereby fixed by the engaging clamping clip portion 152 in conjunction with the screw connection.

FIG. 4 is a side view illustrating a part of a battery module 1 in cross-sectional view according to one embodiment. The cooling elements 13 include a heat transfer medium flowing channel 131 connected to a heat transfer medium flowing channel 144 of the connector 14. The cooling element portion 151 is fluidly connected to the connector 14 via the fluid connecting element 121 of the module base plate 12. In other words, the cooling element portion 151, the module base plate 12, and the cooling elements 13 are fluidly connected. In other words, the aforementioned elements are configured to conduct coolant or refrigerant from a cooling circuit so that a connection between the cooling circuit and the cooling elements 13 is established via a flow path 16. The connector 14 has an inlet and an outlet, one of the two being connected to the cooling elements 13 and the other of the two being connected to the module cooling element connector 15 by means of the fluid connecting element 121 of the module base plate 12. Sealings 17 are disposed between the cooling element portion 151 and the module base plate 12 and between the module base plate 12 and the connector 14 of the cooling elements 13. The connector 14 has an extension along the cooling elements 13 connected to it. The fluidic connection is made over the entire height of the cooling elements 13, but may also only be made over a section of the height of the cooling elements 13, so that the cooling elements 13 are then closed in the remaining area. In the latter case, the connector 14 may only extend over part of the height of the cooling elements 13 connected to it.

The fluid connecting element 121 of the module base plate 12 is a connecting means that ensures a fluidic connection between the cooling element portion 151 and the connector 14 and forms a part of the flow path 16.

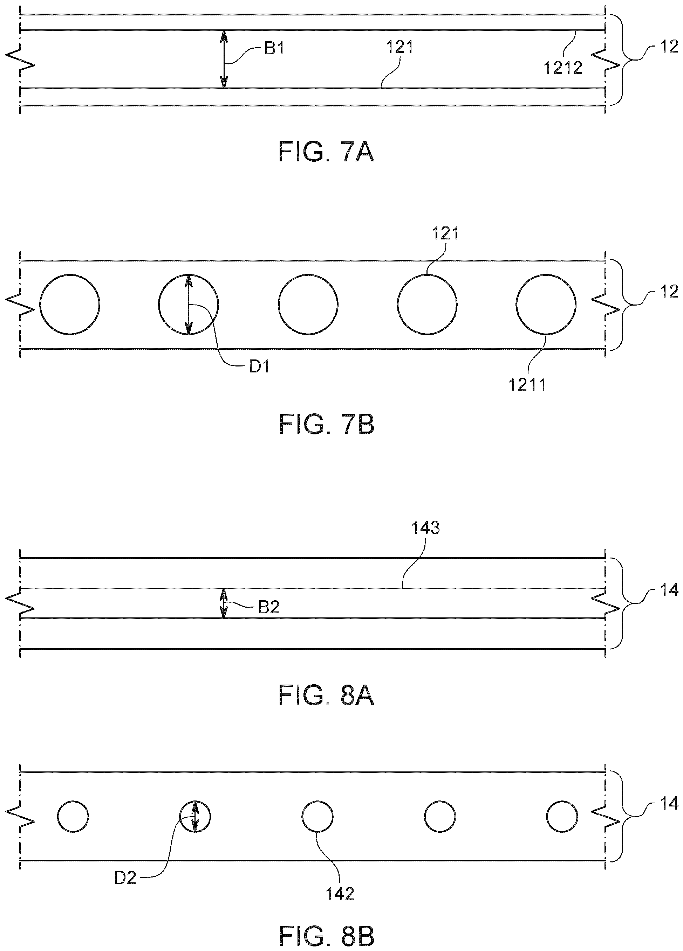

The fluid connecting element 121 and/or the connector 14 include a plurality of through-holes 1211, 142 and/or a longitudinal opening 1212, 143 for forming a part of the flow path 16 which will be described in detail with regard to FIG. 7. The cooling element portion 151 includes a longitudinal channel 154 for the heat transfer medium of a cooling circuit and a plurality of through-holes 155 and/or a longitudinal opening 156 for forming a part of the flow path 16 which will be described in detail with regard to FIG. 7.

The cooling elements 13 may consist of thin-walled extruded aluminum profiles and be plate-shaped. The connector 14 is applied to the thin-walled aluminum extrusion profiles that run between the battery cells 11 by welding or gluing or plugging. The suitable connection technique depends on the material of the connector 14, through which the heat transfer medium is transferred vertically and then horizontally through the thin-walled extruded aluminum profiles. The connection between the connector 14 and cooling elements 13 is shown here using a welded or adhesive joint 18. The connector 14 may be a single connector 14 that is connected to several cooling elements 13. In this case, an area of the connector 14 between various cooling elements 13 is closed in a fluid-tight manner and has other areas that include an opening for connection to the cooling elements 13.

The cooling elements 13 are connected to the cooling circuit via a surface seal and a clamp connection. In the section shown in FIG. 4, the clamp connection that is closed from below by a rotary movement in direction R after assembly of the battery module 1 is shown. This connection may be improved with a fibre-reinforced plastic injection-moulded part as the module cooling element connector 15 to achieve an efficient connection over the service life.

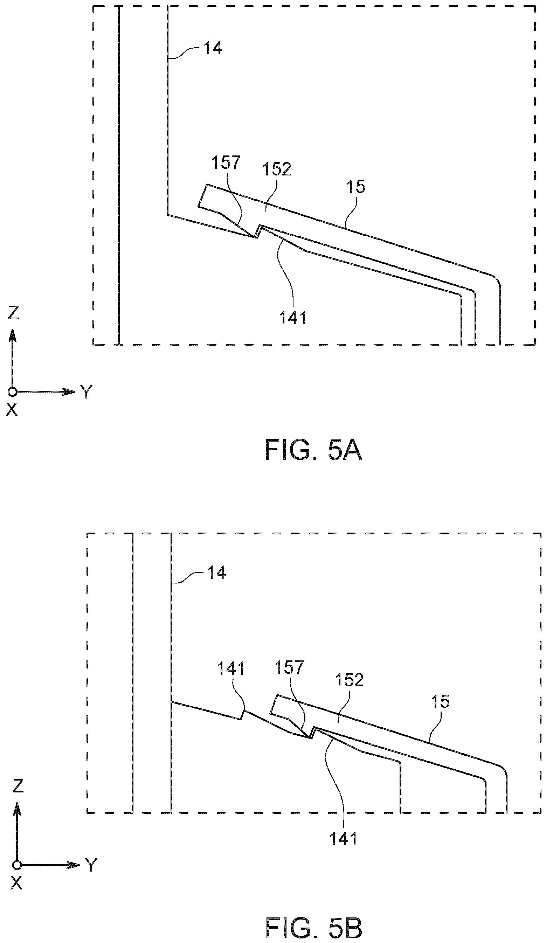

FIG. 5A is a side view illustrating a schematic structure of a snap hook connection between a connector 14 and a clamping clip portion 152 in a side view according to one embodiment. FIG. 5A shows the dashed framed area of FIG. 4. It should be noted that the connection shown in FIG. 5A may also be used for a connection between the cooling element portion 151 and module base plate 12, so that in other words the pivotable bearing 153 is not necessary in this case. The clamping clip portion 152 is configured to form a form-fit connection with the connector 14. It is also possible that the cooling element portion 151 is also configured to form a form-fit connection with the module base plate 12. The form-fit connection is a snap fit connection. In other words, the clamping clip portion 152 and the connector 14 of the cooling elements 13 provide a snap fit connection with each other. The clamping clip portion 152 and the connector 14 each include a snap hook 157 and 141 which correspond to each other for connecting. Such a connection may be combined with the module cooling element connector 15 including an elasticity such that the module cooling element connector 15 is elastically deformable. By manually spreading the cooling element portion 151 and clamping clip portion 152, their distance from each other increases reversibly and assembly can be carried out in the meantime by connecting the aforementioned elements to the module base plate 12 and the connector 14 by engaging over the snap hook 141 of the connector 14 after spreading and then releasing the tension, with the cooling element portion 151 and clamping clip portion 152 engaging around the module base plate 12 and connector 14.

FIG. 5B is a side view illustrating a schematic structure of a snap hook connection between a connector 14 and a clamping clip portion 152 in a side view according to another embodiment. The clamping clip portion 152 and the connector 14 include a plurality of snap hooks 157 and 141 for connecting at different positions due to tolerance chain in the cell stack and/or changes in the width of the cell stack.

FIG. 6 is a side view illustrating a part of a battery module 1 in cross-sectional view according to another embodiment. Elements already described in FIG. 1A and in FIG. 4 that also appear in FIG. 6 and are similar to those in FIG. 1A and FIG. 4 are not described repeatedly. Instead, the above also applies to these components. The module cooling element connector 15 is configured to form a form-fit connection between the clamping clip portion 152 and the cooling element portion 151 via a screw connection between both elements. Accordingly, the clamping clip portion 152 and the cooling element portion 151 each have a bore 1511 and 1521, at least one of which has a thread (not shown). By using a screw 158 corresponding to the thread with a screw head whose diameter is larger than the bore not having a thread, the clamping clip portion 152 and the cooling element portion 151 can be connected to each other. In other words, the module cooling element connector 15 has two separate elements, the clamping clip portion 152 and the cooling element portion 151, both having a bore 1511 and 1521, which can then be form- and force-locked together by means of a corresponding screw 158. The fluid connecting element 121 of the module base plate 12 arranged between the clamping clip portion 152 and the cooling element portion 151 is thereby fixed by the engaging clamping clip portion 152 in conjunction with the screw connection.

FIGS. 7A and 7B are a top view illustrating different configurations of a module base plate 12 according to some embodiments. The fluid connecting element 121 may include a longitudinal opening 1212 as shown in FIG. 7A and/or a plurality of through-holes 1211 as shown in 7B. The through-holes 1211 have a diameter D1. The longitudinal opening 1212 has a width B1.

FIGS. 8A and 8B are a top view illustrating different configurations of a connector 14 according to some embodiments. The connector 14 may include a longitudinal opening 143 as shown in FIG. 8A and/or a plurality of through-holes 142 as shown in FIG, 8B. The through-holes 142 have a diameter D2. The longitudinal opening 143 has a width B2.

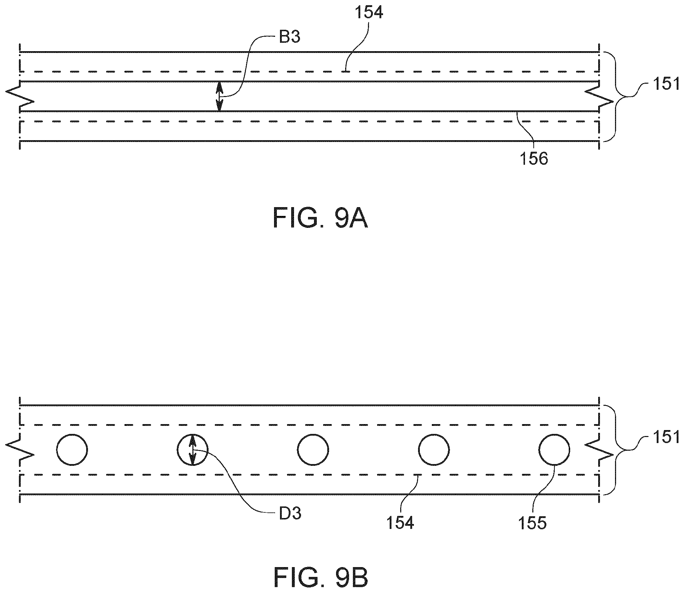

FIGS. 9A and 9B are a top view illustrating different configurations of a cooling element portion 151 according to some embodiments. The cooling element portion 151 includes a longitudinal channel 154 indicated as dashed lines as they are not visible from this perspective for the heat transfer medium of a cooling circuit. The cooling element portion 151 further includes a longitudinal opening 156 as shown in FIG. 9A and/or a plurality of through-holes 155 as shown in FIG. 9B. The through-holes 155 have a diameter D3. The longitudinal opening 156 has a width B3. The diameter D3 may be the same as the diameter D2 and the width B3 may be the same as the width B2.

The diameter D1 of the through-holes 1211 of the fluid connecting element 121 and/or the width B1 of the longitudinal opening 1212 of the fluid connecting element 121 may be larger than the diameter D2 of the through-holes 142 and/or the width B2 of the longitudinal openig143 of the connector 14. Any combination is possible. The fluid connecting element 121 may have through-holes 1211 and the connector 14 may have the longitudinal opening 143. The fluid connecting element 121 may have the longitudinal opening 1212 and the connector 14 may have through-holes 142. An inverse relationship of the dimensions is also possible. In other words, the connecting means of the fluid connecting element 121 may have a different dimension than the connecting means of the connector 14. The diameter D1 of the through-holes 1211 of the fluid connecting element 121 and/or the width B1 of the longitudinal opening 1212 of the fluid connecting element 121 may be larger than the diameter D3 of the through-holes 155 and/or the width B3 of the longitudinal opening 156 of the cooling element portion 151. Any combination is possible. The fluid connecting element 121 may have through-holes 1211 and the cooling element portion 151 may have the longitudinal opening 156. The fluid connecting element 121 may have the longitudinal opening 1212 and the cooling element portion 151 may have through-holes 155. An inverse relationship of the dimensions is also possible. In other words, the connecting means of the fluid connecting element 121 may have a different dimension than the connecting means of the cooling element portion 151. Due to the unequal dimensions, the corresponding connecting means of the fluid connecting element 121, the connector 14 and/or the cooling element portion 151 are aligned in such a way that a flow cross-section always remains free so that there is a continuous fluidic connection between the components.

### Reference signs

- 1: battery module
- 10: end plate
- 11: battery cell
- 12: module base plate
- 121: fluid connecting element
- 1211: trough-hole
- 1212: longitudinal opening
- 13: cooling element
- 131: heat transfer medium flowing channel
- 14: connector
- 141: snap hook
- 142: trough-hole
- 143: longitudinal opening
- 144: heat transfer medium flowing channel
- 15: module cooling element connector
- 151: cooling element portion
- 1511: bore
- 152: clamping clip portion
- 1521: bore
- 153: pivotable bearing
- 154: longitudinal channel
- 155: trough-hole
- 156: longitudinal opening
- 157: snap hook
- 158: screw
- 16: flow path
- 17: sealing
- 18: adhesive joint, welded joint
- B1, B2: width
- D1, D2: diameter
- R: rotary direction
- D: stacking direction

## Claims

1. A battery module (1) comprising:
a module base plate (12);
battery cells (11) stacked in a stacking direction (D) on the module base plate (12);
at least one cooling element (13) with a connector (14), wherein the cooling element (13) is disposed on the module base plate (12); and
at least one module cooling element connector (15) extending along at least a part of the stacking direction (D) on a side of the module base plate (12) opposite to the cooling element (13),
wherein the module cooling element connector (15) comprises:
a cooling element portion (151) which is connected to the connector (14) via a fluid connecting element (121) of the module base plate (12) and via sealings (17) between the cooling element portion (151), the module base plate (12) and the connector (14) of the cooling element (13), wherein a flow path (16) is formed between the cooling element portion (151), the module base plate (12) and the connector (14); and
a clamping clip portion (152) configured to engage with the connector (14) for pulling the cooling element portion (151) and the connector (14) towards the module base plate (12) such that a sealing force is provided onto the sealings (17) by the clamping clip portion (152).

2. The battery module (1) as claimed in claim 1, wherein the clamping clip portion (152) is configured to form a form-fit connection with the connector (14) and/or the cooling element portion (151) is configured to form a form-fit connection with the module base plate (12).

3. The battery module (1) as claimed in claim 1 or 2, wherein the form-fit connection is a snap fit connection.

4. The battery module (1) as claimed in claim 3, wherein the clamping clip portion (152) and/or the cooling element portion (151) comprise a snap hook (157) for connecting to a corresponding snap hook of the module base plate (12) and/or to a corresponding snap hook (141) of the connector (14).

5. The battery module (1) as claimed in claim 4, wherein the clamping clip portion (152) and/or the cooling element portion (151) comprise a plurality of snap hooks (157) for connecting to corresponding snap hooks of the module base plate (12) and/or to corresponding snap hooks (141) of the connector (14) at different positions.

6. The battery module (1) as claimed in any one of claims 1 to 5, wherein the module cooling element connector (15) is pivotably mounted on the module base plate (12) and adapted to be pivoted from an opened position in which the cooling element (13) can be positioned on the module base plate (12) to a closed position in which the module base plate (12) is clamped between the connector (14) of the cooling plate and the cooling element portion (151).

7. The battery module (1) as claimed in any one of claims 1 to 6, wherein the cooling element (13) is an aluminum extrusion profile, a plate heat exchanger and/or a tube heat exchanger.

8. The battery module (1) as claimed in any one of claims 1 to 7, wherein the cooling element (13) is connected to the connector (14) via a substance-to-substance, form-fit and/or force-fit connection.

9. The battery module (1) as claimed in any one of claims 1 to 8, wherein the connector (14) and/or the module cooling element connector (15) comprise fiber-reinforced plastic and/or cast material die-cast material.

10. The battery module (1) as claimed in any one of claims 1 to 9, wherein the fluid connecting element (121) and/or the connector (14) comprise a plurality of through-holes (1211, 142) and/or a longitudinal opening (1212, 143) for forming a part of the flow path (16).

11. The battery module (1) as claimed in any one of claims 1 to 10, wherein the cooling element portion (151) comprise a longitudinal channel (154) for a heat transfer medium and a plurality of through-holes (155) and/or a longitudinal opening (156) for forming a part of the flow path (16).

12. The battery module (1) as claimed in claim 10 or 11, wherein the plurality of through-hole (1211, 142, 155) and/or the longitudinal opening (1212, 143, 156) of the fluid connecting element (121), of the connector (14) and/or of the cooling element portion (151) comprise a pattern and/or a dimension (B1, B2, D1, D2) configured to vary a mounting position of the cooling element (13).

13. The battery module (1) as claimed in any one of claims 1 to 12, wherein the sealings (17) comprise a paper gasket, vulcanized elastomer, loose elastomer and/or a metal gasket.

14. The battery module (1) as claimed in any one of claims 1 to 13, wherein the module cooling element connector (15) comprises an elasticity such that the module cooling element connector (15) is elastically deformable and such that the cooling element portion (151) and/or the clamping clip portion (152) interlocks detachably and/or non-detachably with the module base plate (12) and/or the connector (14).

15. An electric vehicle comprising the battery module (1) as claimed in any one of the preceding claims.

## Amended claims

### Amended claims in accordance with Rule 137(2) EPC.

1. A battery module (1) comprising:
a module base plate (12);
battery cells (11) stacked in a stacking direction (D) on the module base plate (12);
at least one cooling element (13) with a connector (14), wherein the cooling element (13) is disposed on the module base plate (12); and
at least one module cooling element connector (15) extending along at least a part of the stacking direction (D) on a side of the module base plate (12) opposite to the cooling element (13),
wherein the module cooling element connector (15) comprises:
a cooling element portion (151) which is connected to the connector (14) via a fluid connecting element (121) of the module base plate (12) and via sealings (17) between the cooling element portion (151), the module base plate (12) and the connector (14) of the cooling element (13), wherein a flow path (16) is formed between the cooling element portion (151), the module base plate (12) and the connector (14); and
a clamping clip portion (152) configured to engage with the connector (14) for pulling the cooling element portion (151) and the connector (14) towards the module base plate (12) such that a sealing force is provided onto the sealings (17) by the clamping clip portion (152).

2. The battery module (1) as claimed in claim 1, wherein the clamping clip portion (152) is configured to form a form-fit connection with the connector (14) and/or the cooling element portion (151) is configured to form a form-fit connection with the module base plate (12).

3. The battery module (1) as claimed in claim 2, wherein the form-fit connection is a snap fit connection.

4. The battery module (1) as claimed in claim 3, wherein the clamping clip portion (152) and/or the cooling element portion (151) comprise a snap hook (157) for connecting to a corresponding snap hook of the module base plate (12) and/or to a corresponding snap hook (141) of the connector (14).

5. The battery module (1) as claimed in claim 4, wherein the clamping clip portion (152) and/or the cooling element portion (151) comprise a plurality of snap hooks (157) for connecting to corresponding snap hooks of the module base plate (12) and/or to corresponding snap hooks (141) of the connector (14) at different positions.

6. The battery module (1) as claimed in any one of claims 1 to 5, wherein the module cooling element connector (15) is pivotably mounted on the module base plate (12) and adapted to be pivoted from an opened position in which the cooling element (13) can be positioned on the module base plate (12) to a closed position in which the module base plate (12) is clamped between the connector (14) of the cooling element (13) and the cooling element portion (151).

7. The battery module (1) as claimed in any one of claims 1 to 6, wherein the cooling element (13) is an aluminum extrusion profile, a plate heat exchanger and/or a tube heat exchanger.

8. The battery module (1) as claimed in any one of claims 1 to 7, wherein the cooling element (13) is connected to the connector (14) via a substance-to-substance, form-fit and/or force-fit connection.

9. The battery module (1) as claimed in any one of claims 1 to 8, wherein the connector (14) and/or the module cooling element connector (15) comprise fiber-reinforced plastic and/or cast material die-cast material.

10. The battery module (1) as claimed in any one of claims 1 to 9, wherein the fluid connecting element (121) and/or the connector (14) comprise a plurality of through-holes (1211, 142) and/or a longitudinal opening (1212, 143) for forming a part of the flow path (16).

11. The battery module (1) as claimed in any one of claims 1 to 10, wherein the cooling element portion (151) comprise a longitudinal channel (154) for a heat transfer medium and a plurality of through-holes (155) and/or a longitudinal opening (156) for forming a part of the flow path (16).

12. The battery module (1) as claimed in claim 10 or 11, wherein the plurality of through-hole (1211, 142, 155) and/or the longitudinal opening (1212, 143, 156) of the fluid connecting element (121), of the connector (14) and/or of the cooling element portion (151) comprise a pattern and/or a dimension (B1, B2, D1, D2) configured to vary a mounting position of the cooling element (13).

13. The battery module (1) as claimed in any one of claims 1 to 12, wherein the sealings (17) comprise a paper gasket, vulcanized elastomer, loose elastomer and/or a metal gasket.

14. The battery module (1) as claimed in any one of claims 1 to 13, wherein the module cooling element connector (15) comprises an elasticity such that the module cooling element connector (15) is elastically deformable and such that the cooling element portion (151) and/or the clamping clip portion (152) interlocks detachably and/or non-detachably with the module base plate (12) and/or the connector (14).

15. An electric vehicle comprising the battery module (1) as claimed in any one of the preceding claims.
